# EUROPÄISCHE PATENTSCHRIFT

(11) **EP 1 086 152 B1**
(45) Veröffentlichungstag und Bekanntmachung des Hinweises auf die Patenterteilung: **13.10.2004**
(21) Anmeldenummer: 99920616.2
(22) Anmeldetag: 08.04.1999
(51) Int. Cl.: C08F 8/32

(54) **VERFAHREN ZUR HERSTELLUNG OSMOTISCH UND MECHANISCH STABILER GELFÖRMIGER ANIONENAUSTAUSCHER**
METHOD FOR PRODUCING OSMOTICALLY AND MECHANICALLY STABLE GEL-LIKE ANION EXCHANGERS
PROCEDE POUR LA FABRICATION D'ECHANGEURS ANIONIQUES GELIFORMES A STABILITE OSMOTIQUE ET MECANIQUE

(30) Priorität: 21.04.1998 DE 19817679
(43) Veröffentlichungstag der Anmeldung: 28.03.2001
(73) Patentinhaber: Bayer Chemicals AG, 51368 Leverkusen (DE)
(72) Erfinder: LÜTJENS, Holger, D-51065 Köln (DE); KLIPPER, Reinhold, D-50933 Köln (DE); MARTIN, Georg, D-40764 Langenfeld (DE); MITSCHKER, Alfred, D-51519 Odenthal (DE); HOLZBRECHER, Michael, D-51766 Engelskirchen (DE)
(86) Internationale Anmeldenummer: PCT/EP1999/002399
(87) Internationale Veröffentlichungsnummer: WO 1999/054366

(56) Entgegenhaltungen:
- EP-A- 0 776 911
- US-A- 4 585 800
- CHEMICAL ABSTRACTS, vol. 111, no. 18, 30. Oktober 1989 (1989-10-30) Columbus, Ohio, US; abstract no. 155499d, Seite 82; XP000253104 & SU 1 479 460 A (PLASTMASSY SCIENTIFIC-INDUSTRIAL ENTERPRISES) 15. Mai 1989 (1989-05-15)
- CHEMICAL ABSTRACTS, vol. 84, no. 16, 19. April 1976 (1976-04-19) Columbus, Ohio, US; abstract no. 106533a, Seite 36; XP002088952 & RO 57 961 A (INSTITUTUL DE CHIMIE MACROMOLECULARA "PETRE PONI") 4. November 1974 (1974-11-04)

## Beschreibung

Die Erfindung betrifft ein Verfahren zur Herstellung basischer Anionenaustauscher mit einer verbesserten mechanischen und osmotischen Stabilität, wie es in den Ansprüchen 1 bis 3 definiert ist.

Für Anionenaustauscher gibt es heute eine Vielzahl interessanter Anwendungen. So werden sie zum Beispiel bei der Trinkwasseraufbereitung, bei der Herstellung von Reinstwasser (notwendig bei der Mikrochipherstellung für die Computerindustrie), zur Reinigung und Entfärbung von Zuckerlösungen und zur Entfernung von Schwermetallkomplexen aus Lösungen eingesetzt.

Für alle diese Anwendungen ist erwünscht, daß die in Perlform vorliegenden Anionenaustauscher ihren Habitus behalten und nicht während der Anwendung teilweise oder auch gänzlich abgebaut oder in Bruchstücke zersplittern. Bruchstücke und Perlpolymerisatsplitter können dadurch während der Reinigung in die zu reinigenden Lösungen selbst gelangen und diese verunreinigen. Ferner ist das Vorhandensein von geschädigten Perlpolymerisaten für die Funktionweise der in Säulenverfahren eingesetzten Anionenaustauscher selbst ungünstig. Splitter führen zu einem erhöhten Druckverlust des Säulensystems und vermindern damit den Durchsatz an zu reinigender Flüssigkeit durch die Säule.

Verschiedene Faktoren beeinflussen die physikalische Stabilität der Anionenaustauscher. Dazu gehören unter anderem die Bedingungen der Perlpolymerisatherstellung sowie die Bedingungen der Aminierung der aromatischen, vernetzten Haloalkylgruppen tragenden Copolymeren, die als Perlpolymerisate hergestellt werden.

Aufgabe der Erfindung war daher das Bereitstellen eines Verfahrens zur Herstellung von Anionenaustauschern mit verbesserter Stabilität. Überraschenderweise wurde nun gefunden, daß diese Aufgabe durch Aminierung des gelförmigen Chlormethylats in wäßriger, kleine Mengen eines anorganischen Salzes enthaltender Lösung, gelöst wird.

Gegenstand der Erfindung ist also ein Verfahren zur Herstellung gelförmiger Anionenaustauscher durch Aminierung vernetzter gelförmiger Styrol Divinylbenzol Perlpolymerisate, die Halogenalkylgruppen enthalten, wie es in Anspruch 1 definiert ist.

Als Basispolymerisat dient ein vernetztes Polymerisat ethylenisch einfach ungesättigter Monomerer, die zum überwiegenden Teil aus mindestens einer Verbindung der Reihe Styrol, Vinyltoluol, Ethylstyrol, α-Methylstyrol und deren kemhalogenierten Derivaten wie Chlorstyrol bestehen.

In jüngster Zeit haben Ionenaustauscher mit möglichst einheitlicher Teilchengröße (nachfolgend "monodispers" genannt) zunehmend an Bedeutung gewonnen, weil bei vielen Anwendungen aufgrund der günstigeren hydrodynamischen Eigenschaften eines Austauscherbettes aus monodispersen Ionenaustauschern wirtschaftliche Vorteile erzielt werden können. Eine der Möglichkeiten, monodisperse Ionenaustauscher herzustellen, besteht im sogenannten seed/feed-Verfahren, wonach ein monodisperses nichtfunktionalisiertes Polymerisat ("Saat") in Monomer gequollen, und dieses dann polymerisiert wird. Seed/feed-Verfahren werden beispielsweise in den Patentschriften EP-0 098 130, EP-0 101 943, EP-0 418 603, EP-0 448 391, EP-0 062 088, EP-0-776 911, US-A-4 585 800 und US-A 4 419 245 beschrieben.

Eine andere Möglichkeit monodisperse Ionenaustauscher herzustellen besteht darin, die zugrundeliegenden monodispersen Perlpolymerisate nach einem Verfahren herzustellen, bei dem die einheitlich ausgebildeten Monomertropfen durch Schwingungsanregung eines laminaren Stromes von Monomeren gebildet und anschließend polymerisiert werden US-A 4 444 961, EP-0 046 535.

Ein technisch ausgeübtes Verfahren zur Herstellung von Anionenaustauschern, ausgehend von Perlpolymerisaten auf der Basis von Styrol Divinylbenzol (DVB) geht in der Weise vor, daß die in den Perlpolymerisaten vorliegenden aromatischen Ringsysteme zunächst mit Chlormethylgruppen funktionalisiert (Chlormethylierung) und anschließend mit Aminen umgesetzt werden.

Bei der Chlormethylierung reagiert das vernetzte Perlpolymerisat auf Styrol/Divinylbenzol (DVB) Basis unter Katalyse mit Fe₂O₃, FeCl₃, Zinkchlorid, Zinn(IV)chlorid, Aluminiumchlorid oder anderen Friedel-Crafts-Verbindungen mit Monochlordimethylether unter Freisetzung von Methanol und anderen Komponenten - siehe EP-0 327 255.

Die Herstellung von Monochlordimethylether ist gewöhnlich begleitet mit dem Entstehen von karzinogenen Bischlordimethylether. Es gibt verschiedene Verfahrensvarianten zur Herstellung des Monochlordimethylether und seiner Umsetzung mit Perlpolymerisaten auf der Basis von Styrol Divinylbenzol (DVB) - siehe EP-0 327 255, US-A-4 225 677, US-A-4 207 398, US-A-5 523 327, DD-250 128, US-A 4 207 398.

Generell wird ein Überschuß des Chlormethylierungsagenzes eingesetzt, da dieses nicht nur als Agenz, sondern auch als Quellmittel für das Perlpolymerisat dient - siehe EP-0 776 911.

Nach beendeter Chlormethylierung gibt es verschiedene Möglichkeiten das verbliebene Reaktionsmedium, das inbesondere Monochlordimethylether enthält, von dem chlormethylierten Perlpolymerisat abzutrennen und das Chlormethylat aufzuarbeiten.

In JP-A-7-188 333 wird nach beendeter Chlormethylierung der verbliebene Monochlordimethylether durch Solvent Extraktion entfernt.

In EP-0 776 911 wird nach beendeter Chlormethylierung wäßrige Salzsäure zudosiert, der Ansatz auf 110°C erhitzt und nicht abreagiertes Monochlordimethylether destilliert. Das Chlormethylat wird zentrifugiert und fällt als feuchte Ware an.

In EP-0 327 255 werden nach der Chlormethylierung Methanol und Formaldehyd, gegebenenfalls auch Methylal, hinzudosiert. Der Ansatz wird gerührt, nach ca. 1 Stunde wird Salzsäure eindosiert. Der schon vorhandene und der neu gebildete Monochlordimethylether werden abdestilliert. Das Chlormethylat wird gegebenenfalls mit Methylal, dann mit Wasser gewaschen und anschließend mit wäßriger Natronlauge neutralisiert.

In EP-0 481 603 wird nach der Chlormethylierung Methanol zugesetzt, um restlichen Monochlordimethylether zu zersetzen. Das gelförmige Chlormethylat wird dann mit Methanol zur Entfernung von Nebenprodukten gewaschen.

In DD-250 129 wird nach der Chlormethylierung das Chlormethylat über eine Fritte abgetrennt und dann mit Methanol gewaschen.

Das erhaltene Chlormethylat kann in unterschiedlicher Weise mit verschiedenen Aminen zu Anionenaustauschern umgesetzt werden.

In der Technik häufig eingesetzt werden Anionenaustauscher mit tertiären - oder quartären Ammoniumgruppen. So ist der Einsatz von Anionenaustauschern mit Trimethylamin bzw. Dimethyl-, Hydroxyethylammoniumgruppierungen gebräuchlich.

EP-0 776 911 beschreibt die Aminierung eines aromatischen, vernetzten, Haloalkylgruppen enthaltenden Copolymeren. Das Copolymer selbst liegt als poröses Perlpolymerisat vor und wird durch Suspensionspolymerisation hergestellt. In den Beispielen 1 bis 4 wird die Aminierung poröser Chlormethylate in wäßrigen Kochsalzlösungen unter Zusatz von Toluol beschrieben. Das Chlormethylat wird mit einem Amin in Gegenwart von mindestens 100 Gewichtsteilen Wasser pro 100 Gewichtsteile Chlormethylat und mindestens 5 Gewichtsteilen eines wasserlöslichen anorganischen Salzes pro 100 Gewichtsteile Wasser unter Zusatz von Toluol umgesetzt. Als Amin wird Trimethylamin, als anorganisches Salz Natriumchlorid in Gegenwart organischer Solventien wie Benzol, Toluol, Xylol oder Dichlorethan eingesetzt. Aminiert wird bei einer Temperatur von 50°C. Die Druckfestigkeit der hergestellten Anionenaustauscherperlen wurde gemessen. Die Anwesenheit von mindestens 5 Gew.-% Natriumchlorid im Wasser während der Aminierung erhöht die Druckfestigkeit der Anionenaustauscher, im Vergleich zum Produkt hergestellt ohne Natriumchlorid, erheblich.

US-A 5 182 026 beschreibt die Aminierung eines aromatischen, vernetzten, Haloalkylgruppen enthaltenden Copolymeren. Das Copolymer selbst liegt als poröses Perlpolymerisat vor und wird durch Suspensionspolymerisation hergestellt. In den Beispielen 1 bis 3 und A bis C wird die Aminierung poröser Chlormethylate beschrieben. Die Aminierung wird in zwei Teilschritten durchgeführt. Zunächst wird mit primären oder sekundären Aminen umgesetzt, wodurch zwischen 15 und 95 % der Haloalkylgruppen umgesetzt werden. Anschließend wird das teilweise aminierte Harz mit tertiären Aminen wie Trimethylamin oder Triethylamin zu stark basischen Anionenaustauschern umgesetzt. Die Erstaminierung wird in Wasser unter Zusatz von 100 bis 280 g Kochsalz sowie einer Base wie NaOH bei Temperaturen zwischen 60 und 100°C durchgeführt. Als Copolymer kann auch ein nach dem seed-Verfahren hergestelltes gelförmiges Polymerisat eingesetzt werden.

EP-0 481 603 beschreibt die Aminierung gelförmiger Copolymer-Perlen, die nach einem seed-Verfahren hergestellt wurden. Die Perlpolymerisate besitzen core/shell-Morphologie. Darunter versteht man, daß die Polymerstruktur der Perlen variiert mit der Entfernung vom Zentrum der Perlen. Während der Haloalkylierung erfolgt eine Nachvernetzung durch Einführung von Methylenbrücken. Das nachvernetzte, chlormethylierte gelförmige Perlpolymerisat wird in Quellmitteln wie Wasser oder in einer Mischung von Wasser mit organischen Stoffen wie Methanol, Methylal oder Methylenchlorid mit aliphatischen, sekundären Aminen bei Temperaturen zwischen 60 und 100°C aminiert. Ferner wird eine Base wie Natriumhydroxid zugesetzt. Kochsalz wird nicht zugesetzt. Als sekundäre Amine werden in mindestens stöchiometrischen Mengen Dimethylamin, Diethylamin oder Dipropylamin eingesetzt. In das Harz werden durch die Funktionalisierung überwiegend schwach basische Gruppen eingeführt. Ferner entstehen durch Nachvernetzung Aminbrücken.

In EP-0 327 255 wird die Aminierung eines chlormethylierten gelförmigen Copolymeren auf der Basis von Styrol und Divinylbenzol beschrieben. Eine wäßrige slurry des Chlormethylates wird mit Natronlauge versetzt. Gasförmiges Trimethylamin wird in den Autoklav destilliert. Es wird zunächst bei 15°C, dann 6 Stunden bei 28°C, gerührt.

EP-0 277 795 beschreibt die Aminierung eines chlormethylierten Styrol Divinylbenzol Copolymeren. Das Copolymere enthält 0,5 bis 2 Gew.-% Divinylbenzol. Das wassergequollene Chlormethylat wird in Wasser mit wäßriger Trimethylaminlösung versetzt und im Bereich zwischen 5 und 35°C gerührt.

In einem weiteren Beispiel wird Chlormethylat, hegestellt aus 100 g Copolymer, angeschlagen. Es werden 74 g Natriumchlorid, wäßrige Natronlauge und wäßrige Trimethylaminlösung zudosiert. Zunächst bei Temperaturen zwischen 0 und 20°C, dann, zur Entfernung des Trimethylamins, wird destilliert. Alle Perlen sind fragmentiert.

In einem weiteren Beispiel wird wie oben verfahren, die Perlen werden aber in Ethylacetat slurried. Nach der Aminierung liegen stabile Anionenaustauscher vor.

In US-A 4 419 245 werden gelförmige Copolymere auf Styrol Divinylbenzol Basis - hergestellt nach dem seed/feed-Verfahren - chlormethyliert. Ein mol Chlormethylat wird in Wasser aufgenommen und mit Natronlauge basisch gestellt (pH >13). 1,5 mol wasserfreies Trimethylamin werden zudosiert. Die Suspension wird 8 bis 12 Stunden bei Raumtemperatur gehalten, anschließend wird zur Entfernung von Restmengen an Amin auf 100°C erhitzt.

In DE-19 634 393 wird ein methanolfeuchtes Chlormethylat in 2,5 Gew.-%iger wäßriger Kochsalzlösung mit Dimethylaminoethanol umgesetzt. Angaben über die Stabilität des Harzes werden nicht gemacht. Die Methanolfeuchte des Chlormethylates führt dazu, daß die Aminierung in einem Wasser/Methanolgemisch durchgeführt wird.

Die genannten Schriften zeigen, daß die Reaktionsbedingungen der Aminierung die Stabilität des daraus hergestellten Anionenaustauschers wesentlich beeinflussen.

Es besteht ein Bedarf stabile Anionenaustauscher herzustellen nach einem Verfahren, das auf den Einsatz von organischen Solventien verzichtet und die Menge an anorganischem Salz - wie Natriumchlorid - möglichst klein hält.

Reste der organischen Solventien verbleiben nämlich immer im Harz und verunreinigen bei Einsatz der Harze als Anionenaustauscher das zu reinigende Wasser. Ferner ist es verfahrenstechnisch aufwendig, das nach der Aminierung in der Reaktionsbrühe vorhandene organische Solvenz abzutrennen. Die Menge an anorganischem Salz sollte aus Umweltschutzgründen und Kostengründen möglichst niedrig sein.

In der vorliegenden Erfindung wird die Herstellung eines Anionenaustauschers durch Umsetzung eines aromatischen, vernetzten, Haloalkylgruppen enthaltenden Copolymeren mit einem Amin beschrieben. Die Aminierung wird in Gegenwart einer wäßrigen Lösung eines anorganischen Salzes durchgeführt. Jedes anorganische Salz kann eingesetzt werden, solange es wasserlöslich ist. Dazu gehören wasserlösliche Halogenide, Carbonate und Sulfate von Alkalimetallen wie Natrium und Kalium und von Erdalkalimetallen wie Magnesium und Calcium. Bevorzugt wird Natriumchlorid eingesetzt.

Das anorganische Salz wird in einer Menge von 1 bis 4,5 Gew.-%, bevorzugt 1,5 bis 4 Gew.-%, anorganisches Salz, bezogen auf die Gesamtmenge Wasser, eingesetzt. Die Gesamtmenge Wasser ergibt sich aus der Summe an zugesetztem Wasser und der in der wäßrigen Aminlösung eingebrachten Wassermenge.

Die Wasserfeuchte des Harzes bleibt zunächst hierbei unberücksichtigt.

Wasser erfüllt bei der Aminierung verschiedene Aufgaben. Zum einen ist es Rührmedium, zum anderen ist es Reaktionsmedium oder es ist auch in der vorliegenden Erfindung Lösemittel für das Amin.

Während der Aminierung nimmt das Harz kontinuierlich Wasser auf und quillt hierbei auf. Daher ist eine Mindestmenge an Wasser notwendig, um den Ansatz überhaupt rührfähig zu halten. Es gibt keine besondere Obergrenze an Wasser. Ein oberer Grenzbereich ergibt sich aber dadurch, daß bei Einsatz einer sehr großen Wassermenge die Konzentration des Amins klein ist bei vorgegebenem Molverhältnis Amin zu Chlor (im Chlormethylat). Ferner erniedrigt sich die Raum/Zeit-Ausbeute, wenn man sehr verdünnt fährt. Zudem erhöht sich die Menge an anorganischem Salz, das bei vorgegebener Salzkonzentration eingesetzt werden muß.

Pro Gramm Halogenalkylgruppen enthaltendem Perlpolymerisat sollen mindestens 1,5 Gramm, bevorzugt 3 Gramm Wasser eingesetzt werden. Bevorzugt wird als Halogenalkylgruppe Chlormethylat eingesetzt.

Es ist nicht notwendig, ein organisches Lösemittel zuzusetzen.

Als Aminierungsreagens werden Trimethylamin, Triethylamin, Tripropylamin, oder Tributylamin eingesetzt.

Beim Einsatz von beispielsweise Chlormethylatgruppen enthaltendem Perlpolymerisat wird die Menge Amin, die zur vollständigen Umsetzung des Chlormethylates erforderlich ist, eingesetzt. Diese muß mindestens 1 mol Amin, bezogen auf 1 mol Chlor im Chlormethylat, betragen. Bevorzugt werden 1,15 mol Amin pro mol Chlor eingesetzt.

Die Temperatur, bei der die Aminierung durchgeführt wird, kann im Bereich zwischen Raumtemperatur und 160°C liegen. Bevorzugt wird bei Temperaturen zwischen 70 und 120°C, besonders bevorzugt im Bereich zwischen 70 und 110°C, gearbeitet.

Nach beendeter Aminierung wird die Flüssigkeit vom aminierten Perlpolymerisat abgetrennt. Zur Reinigung wird das Perlpolymerisat mit wässriger, verdünnter Salzsäure aufgenommen und 1 bis 6 Stunden bei Temperaturen zwischen 40 und 90°C gerührt.

Die Konzentration der Salzsäure kann im Bereich 1 bis 15Gew.-%, bevorzugt 2 bis 5 Gew.-% liegen.

### Messung der Harzstabilität

### Bestimmung der Anzahl perfekter Perlen im Originalzustand:

100 Perlen werden unter dem Mikroskop betrachtet. Ermittelt wird die Anzahl der Perlen, die Risse tragen oder Absplitterungen zeigen. Die Anzahl perfekter Perlen ergibt sich aus der Differenz der Anzahl beschädigter Perlen zu 100.

### Bestimmung der Anzahl perfekter Perlen im Quellungsstabilitätstest:

In eine Säule werden 25 ml Anionenaustauscher in die Chloridform eingefüllt. Nacheinander werden 4 gew.-%ige wäßrige Natronlauge, Edelwasser, 6 gew.-%ige Salzsäure und voll entsalztes Wasser beaufschlagt, wobei die Natronlauge und die Salzsäure von oben durch das Harz fließen und das Edelwasser von unten durch das Harz gepumpt wird. Die Elution erfolgt zeitgetaktet über ein Steuergerät. 20 Arbeitszyklen sind nach 20 Stunden beendet. Nach Ende der Arbeitszyklen werden von dem Harzmuster 100 Perlen ausgezählt. Ermittelt wird die Anzahl der Perlen von 100, die durch Risse oder Absplitterungen geschädigt sind, also nicht perfekt sind.

### Herstellung des Copolymeren:

Die Herstellung des Copolymeren erfolgt nach den in den Anmeldungen EP-0 098 130, EP-0 101 943, EP-0 481 603, EP-0 448 391, EP-0 062 088, US-A 4 419 245 beschriebenen seed/feed-Verfahren sowie nach den in den Anmeldungen US-A-4 444 961, EP-0 046 535 beschriebenen Beispielen.

Ferner kann das Copolymer auch nach den in den US-A 2 788 330, US-A 3 509 078 und US-A 4 501 526 beschriebenen Verfahren sowie nach Verfahren in Vinyl and Related Polymers, C. Schildknecht, Wiley, 1952, S. 68-75 hergestellt werden.

### Beispiel 1

### Herstellung eines Perlpolymerisates

3,59 g Borsäure und 0,99 g Natriumhydroxid werden in einem 4 l Glasreaktor in 1160 ml VE-Wasser gelöst. In diese Lösung werden 190,5 g eines mikroverkapselten kugelförmigen Styrolpolymerisates mit 0,5 % Divinylbenzolgehalt als Saat (mittlere Teilchengröße 215 µm) dispergiert. Die Mikrokapsel besteht aus einem mit Formaldehyd gehärteten Komplexkoazervat aus Gelatine und einem Copolymer aus Acrylamid und Acrylsäure. Danach wird während 30 min eine Mischung aus 845 g Styrol, 48 g Acrylnitril, 116 g Divinylbenzol (80 %, handelsübliches Isomerengemisch aus Divinylbenzol und Ethylbenzol) und 8 g Dibenzoylperoxid (75 %, handelsübliche wasserfeuchte Qualität) hinzudosiert und anschließend 1 h gerührt. Nach dieser Zeit werden 60 ml einer 2 Gew.-%igen Methylhydroxypropylcelluloselösung hinzugefügt. Der Ansatz wird durch Temperaturerhöhung auspolymerisiert, abgekühlt, über ein 32 µm-Sieb gewaschen und getrocknet. Man erhält 1150 g eines regelmäßig geformten Perlpolymerisates. Die Teilchengrößenverteilung des Perlpolymerisates (mittlere Teilchengröße 400 µm) bildet die Teilchengrößenverteilung der Saat exakt ab.

### Beispiel 2

### Chlormethylierung eines Perlpolymerisates

In einem 3 l Sulfierbecher wird eine Mischung aus 1600 g Monochlordimethylether, 165 g Methylal und 5 g Eisen(III)chlorid vorgelegt und anschließend 300 g Perlpolymerisat aus Beispiel 1 zugegeben. Das Perlpolymerisat wird 30 min bei Raumtemperatur gequollen und in 3 h auf Rückflußtemperatur (55°C) erhitzt. Anschließend rührt man weitere 1,75 h unter Rückfluß nach. Während der Reaktionszeit werden ca. 275 g Salzsäure und leichtsiedende Organika abgetrieben. Anschließend wird die dunkelbraune Reaktionssuspension abfiltriert, das Chlormethylat mit einer Mischung aus Methylal und Methanol, anschließend mit Methanol, dann mit Edelwasser, intensiv gewaschen. Man erhält 680 g wasserfeuchtes, chlormethyliertes Perlpolymerisat. Chlorgehalt: 18,7%.
100 ml nutschfeuchtes Chlormethylat wiegen 65,9 g. Sie enthalten 12,45 g Chlor entsprechend 0,351 mol.

### Beispiel 3

### Umsetzung des chlormethylierten Perlpolymerisates aus Beispiel 2 mit Trimethylamin

Im Autoklav werden 1179 ml Edelwasser vorgelegt. Dazu dosiert man 136,4 g Natriumchlorid. Dazu werden 800 ml nutsch(wasser)feuchtes, chlormethyliertes Perlpolymerisat (entsprechend 527,3 g trockenes, chlormethyliertes Perlpolymerisat mit einem Chlorgehalt von 18,7 Gew.-%) und 401,3 g 45 gew.-%ige wäßrige Trimethylaminlösung gegeben.

Die Suspension wird in 1 h auf 120°C erhitzt und weitere 3 Stunden bei 120°C gerührt. Nach dem Abkühlen auf Raumtemperatur wird die Mutterlauge abgesaugt, das Harz wird mit 800 ml Edelwasser versetzt und 30 min bei Raumtemperatur gerührt. Das Wasser wird abdestilliert und durch 2000 ml 3 Gew.-%ige wäßrige Salzsäure ersetzt. Die Suspension wird 4 h bei 70°C gerührt. Nach dem Abkühlen wird die Flüssigkeit abdestilliert, das Harz wird mit Wasser aufgenommen und in einer Säule von unten mit 6 Bettvolumina Edelwasser eluiert.
Ausbeute: 2170 ml Harz eingerüttelt.

### Beispiele 4 bis 9

Es wurde in gleicher Weise wie in Beispiel 3 vorgegangen mit der Änderung, daß die Menge an Kochsalz variiert wurde.

### Beispiel 10

Es wurde in gleicher Weise wie in Beispiel 3 vorgegangen mit der Änderung, daß kein Kochsalz eingesetzt wurde.

In Tabelle 1 sind Daten zu den Einsatzmengen der verschiedenen Beispiele zusammengefaßt.

**Tabelle 1**

| Beispiel | 3 | 4 | 5 | 6* | 7* | 10 |
|---|---|---|---|---|---|---|
| Wasser in Gramm | 1179 | 1179 | 1179 | 1179 | 1179 | 1179 |
| NaCl in Gramm | 136,4 | 102,5 | 75,3 | 49,1 | 24,1 | 0 |
| 45 Gew.-%ige Trimethylaminlösung (TMA) in Gramm | 401,3 | 401,3 | 401,3 | 401,3 | 401,3 | 401,3 |
| Wasser in der TMA Lösung in Gramm | 220,7 | 220,7 | 220,7 | 220,7 | 220,7 | 220,7 |
| Gesamtwassermenge | 1399,7 | 1399,7 | 1399,7 | 1399,7 | 1399,7 | 1399,7 |
| Gew.-% an Natriumchlorid bezogen auf die Wassermenge | 9,75 | 7,32 | 5,38 | 3,51 | 1,72 | 0 |

| | | | | | | |
|---|---|---|---|---|---|---|
| * erfindungsgemäß | | | | | | |

In Tabelle 2 sind Ergebnisse der Ausprüfung der Endprodukte zusammengefaßt.

**Tabelle 2**

| Beispiel | 3 | 4 | 5 | 6* | 7* | 10 |
|---|---|---|---|---|---|---|
| Anzahl perfekter Perlen im Originalzustand von 100 | 98 | 99 | 98 | 98 | 96 | 97 |
| Anzahl perfekter Perlen nach dem Quellungsstabilitätstest von 100 | 97 | 97 | 97 | 98 | 92 | 87 |
| Austauschkapazität in mol/l Harz | 1,331 | 1,307 | 1,288 | 1,324 | | 1,312 |
| Restchlorgehalt in Gew.-% | 0,33 | 0,15 | 0,071 | 0,068 | 0,41 | 0,05 |

| | | | | | | |
|---|---|---|---|---|---|---|
| * erfindungsgemäß | | | | | | |

Die Daten in Tabellen 1 und 2 zeigen, daß bei Einsatz einer 1,72 Gew.-%igen Kochsalzlösung (Beispiel 7) im Vergleich zu einer rein wäßrigen Lösung (Beispiel 10) die Quellungsstabilität der Perlen von 87 auf 92 perfekten Perlen zunimmt. Bei Einsatz einer 3,51 Gew.-%igen Natriumchlorid-Lösung (Beispiel 6) erhöht sich die Stabilität auf 98 % perfekter Perlen. Bei weiterer Erhöhung der Natriumchloridkonzentration erfolgt keine Erhöhung der Stabilität. Der Stabilitätswert nimmt hingegen um einen Punkt ab.

## Patentansprüche

1. Verfahren zur Herstellung osmotisch und mechanisch stabiler gelförmiger Anionenaustauscher, **dadurch gekennzeichnet, dass** vernetzte, gelförmige Styrol Divinylbenzol Perlpolymerisate, die Halogenalkylgruppen enthalten, in Gegenwart von 1 bis 4,5 Gew.-%, bezogen auf die Gesamtmenge Wasser, eines anorganischen, wasserlöslichen Salzes in Abwesenheit von organischen Solventien vollständig aminiert werden, wobei als Aminierungsreagens Trimethylamin, Triethylamin, Tripropylamin oder Tributylamin eingesetzt wird und pro Gramm Halogenalkylgruppen enthaltendem Perlpolymerisat mindestens 1,5 Gramm Wasser eingesetzt werden und bezogen auf 1 mol Chlor im Chlormethylat mindestens 1 mol Amin eingesetzt wird.

2. Verfahren gemäß der Anspruche 1, **dadurch gekennzeichnet, dass** die Aminierung bei Temperaturen zwischen Raumtemperatur und 160°C durchgeführt wird.

3. Verfahren gemäß Anspruch 1, **dadurch gekennzeichnet, dass** als anorganische Salze wasserlösliche Halogenide, Carbonate und Sulfate von Alkalimetallen wie Natrium und Kalium und von Erdalkalimetallen wie Magnesium und Calcium eingesetzt werden.

## Claims

1. Process for preparing osmotically and mechanically stable gel-like anion exchangers, **characterized in that** crosslinked, gel-like styrene divinylbenzene bead polymers which contain halogenoalkyl groups are completely aminated in the presence of from 1 to 4.5% by weight, based on the total amount of water, of an inorganic, water-soluble salt and in the absence of organic solvents, the aminating reagent used being trimethylamine, triethylamine, tripropylamine or tributylamine, and at least 1.5 grams of water being used per gram of bead polymer which contains halogenoalkyl groups, and, based on 1 mol of chlorine in the chloromethylate, at least 1 mol of amine being used.

2. Process according to Claim 1, **characterized in that** the amination is carried out at temperatures between room temperature and 160°C.

3. Process according to Claim 1, **characterized in that** the inorganic salts used comprise water-soluble halides, carbonates and sulphates of alkali metals, such as sodium and potassium, and of alkaline earth metals, such as magnesium and calcium.

## Revendications

1. Procédé pour la préparation d'échangeurs d'anions gélifiés à bonne stabilité osmotique et mécanique, **caractérisé en ce que** l'on soumet à amination totale des polymères en perles styrène-divinylbenzène gélifiés et réticulés, contenant des groupes halogénoalkyle, en présence de 1 à 4,5 % en poids, par rapport à la quantité d'eau totale, d'un sel minéral soluble dans l'eau mais en l'absence de solvants organiques, le réactif d'amination consistant en la triméthylamine, la triéthylamine, la tripropylamine ou la tributylamine, la quantité d'eau mise en oeuvre étant d'au moins 1,5 g par g de polymère en perles contenant des groupes halogénoalkyle et la quantité d'amine mise en oeuvre étant d'au moins 1 mol d'amine par mole de chlore du produit chlorométhylé.

2. Procédé selon la revendication 1, **caractérisé en ce que** l'amination est réalisée à des températures comprises entre la température ambiante et 160°C.

3. Procédé selon la revendication 1, **caractérisé en ce que** l'on utilise en tant que sel minéral un halogénure, carbonate ou sulfate soluble dans l'eau de métal alcalin tel que le sodium ou le potassium ou de métal alcalino-terreux tel que le magnésium ou le calcium.
